# EUROPÄISCHE PATENTSCHRIFT

(11) **EP 1 171 333 B1**
(45) Veröffentlichungstag und Bekanntmachung des Hinweises auf die Patenterteilung: **20.12.2006**
(21) Anmeldenummer: 00917047.3
(22) Anmeldetag: 05.04.2000
(51) Int. Cl.: B60T 8/00

(54) **VERFAHREN UND VORRICHTUNG ZUM ÜBERWACHEN ODER ZUM BEEINFLUSSEN DER BEWEGUNG EINES FAHRZEUGS AUF EINEM WEG**
METHOD AND DEVICE FOR MONITORING OR FOR INFLUENCING THE MOVEMENT OF A VEHICLE ON A PATH
PROCEDE ET DISPOSITIF PERMETTANT DE CONTROLER OU D'INFLUENCER LE DEPLACEMENT D'UN VEHICULE SUR UNE TRAJECTOIRE

(30) Priorität: 12.04.1999 DE 19916267
(43) Veröffentlichungstag der Anmeldung: 16.01.2002
(73) Patentinhaber: Continental Teves AG & Co. oHG, 60488 Frankfurt (DE); A.D.C. GmbH, 88131 Lindau (DE)
(72) Erfinder: ECKERT, Alfred, D-55129 Mainz (DE); MARCZINSKI, Lutz, D-61184 Karben (DE); SCHRAMM, Peter, D-65936 Frankfurt (DE); HAGLEITNER, Walter, A-6900 Bregenz (AT)
(74) Vertreter: Graf, Ulrich
(86) Internationale Anmeldenummer: PCT/EP2000/003007
(87) Internationale Veröffentlichungsnummer: WO 2000/061413

(56) Entgegenhaltungen:
- DE-A- 19 702 383
- DE-A- 19 751 067
- US-A- 5 634 698

## Beschreibung

Die Erfindung betrifft ein Verfahren und eine Vorrichtung zum Überwachen oder zum Beeinflussen der Bewegung eines Fahrzeugs auf einem Weg.

Der Fahrer steuert die Bewegung eines Fahrzeugs gemäß einem einzuhaltenden Weg. Dieses geschieht hauptsächlich über die Lenkung des Fahrzeugs. Ist der Fahrer unaufmerksam, kann das Fahrzeug vom Weg abweichen. Um diesem entgegenzuwirken, sind verschiedene, sogenannte "Lane-Keeping-Systeme" bekannt, die direkt in die Lenkung eines Fahrzeugs eingreifen. Dabei wird z. B. das Gehäuse des Lenkgetriebes verschoben (Deutsche Gesellschaft für Luft und Raumfahrt) oder ein Zusatzlenkmoment über einen Elektromotor auf die Lenkung ausgeübt (Bayerische Motorenwerke).

Die DE 19702383 offenbart ein Fahrzeuglenk-Steuer/Regel-System, bei dem die Aufmerksamkeit des Fahrzeugfahrers aus einem Betriebszustand, beispielsweise dem Lenkdrehmoment, der Gewindestangenschubkraft und/oder der Gierrate des Fahrzeugs, bestimmt wird. Der bestimmte Wert der Aufmerksamkeit des Fahrzeugfahrers wird in der Steuer/Regel-Eigenschaft des Lenk-Steuer/Regel-Systems wiedergegeben. Bei geringer Aufmerksamkeit des Fahrzeugführers bzw. bei Einnicken des Fahrzeugführers macht das Lenk-Steuer/Regel-System seinen Eingriff in die Lenk-Steuerung/Regelung maximal, so dass das Fahrzeug automatisch auf seinen Weg entlang des geeigneten Bewegungsweges gehalten wird.

Auf Anweisung kann der Fahrer durch Anlegen eines Vibrations- Drehmomentes an das Lenkrad gewarnt werden. Bei hoher Aufmerksamkeit des Fahrzeugfahrers wird die Einwirkung des Steuer/Regel-Systems auf die Lenk-Steuerung/Regelung minimal gemacht, so dass der beabsichtigten Lenkanstrengung des Fahrzeugfahrers durch das Lenk-Steuer/Regel-System, selbst wenn ein extremer Lenkvorgang durchgeführt wird, nicht entgegengewirkt wird.

Diese Systeme haben jedoch den Nachteil, daß die Lenkung nicht mehr so reagiert, wie der Fahrer es gewohnt ist oder es möchte. Dadurch kann der Fahrer das Fahrzeug nicht mehr vollständig beherrschen.

Aufgabe der Erfindung ist es daher, ein Verfahren und eine Vorrichtung zum Überwachen oder Beeinflussen der Bewegung eines Fahrzeugs auf einem Weg anzugeben, die nicht in die Lenkung des Fahrzeugs eingreift, wobei der Fahrer die vollständige Kontrolle über das Fahrzeug behält.

Diese Aufgabe wird mit den Merkmalen der unabhängigen Ansprüche gelöst. Abhängige Ansprüche sind auf bevorzugte Ausführungsformen der Erfindung gerichtet.

Das Verfahren zum Überwachen oder Beeinflussen der Bewegung eines Fahrzeugs auf einem Weg beinhaltet zunächst die Ermittlung eines Sollweges, dem das Fahrzeug folgen soll. Dieses kann über geeignete optische Sensoren erfolgen, wie z. B. Infrarot-Sensoren oder eine Video-Kamera, die z. B. die Fahrbahnlinien oder ein vorausfahrendes Fahrzeug erfassen und entsprechende Signale z. B. an eine Bildverarbeitung weitergeben, die daraus den Sollweg, wie z. B. die Ortskoordinaten in bezug auf die Fahrzeugkoordinaten, ermittelt. Dabei kann der Sollweg ein Ortspunkt, eine Punktfolge, ein Vektor oder eine Trajektorie sein.

Des weiteren wird die Istbewegung des Fahrzeugs ermittelt. Dieses kann z. B. den Lenkwinkel, die Giergeschwindigkeit oder die Querbeschleunigung, d.h. die jeweiligen Komponenten um die Hochachse des Fahrzeugs, oder auch entsprechende Komponenten in Fahrzeuglängsrichtung betreffen. Somit kann die Istbewegung von mehreren Parametern abhängig sein bzw. mehrere Komponenten aufweisen. Die zum Ermitteln der Istbewegung benötigte Sensorik kann von einer bekannten ESP-Sensorik (elektronisches Stabilitätsprogramm) bereitgestellt werden.

Danach erfolgt eine vergleichende Betrachtung des Sollweges und der Istbewegung, die vorzugsweise auf zwei Wegen durchgeführt werden kann: Zum einen kann aus dem Sollweg eine Sollbewegung ermittelt werden, die das Fahrzeug durchführen soll, um den Sollweg einzuhalten. Danach kann ein Vergleich zwischen der Sollbewegung und der Istbewegung durchgeführt werden, was als Ergebnis einen Bewegungsunterschied liefert. Eine andere Möglichkeit besteht darin, aus der Istbewegung einen "Istweg" zu extrapolieren, dem das Fahrzeug aufgrund der Istbewegung folgen würde. Danach kann ein Vergleich zwischen dem Sollweg und diesem Istweg durchgeführt werden, was als Ergebnis einen Wegunterschied liefert.

Erfindungsgemäß werden zwei Möglichkeiten angegeben, das Ergebnis der vergleichenden Betrachtung zu verwenden:

Beim Überwachen der Bewegung eines Fahrzeugs wird eine Informationsgröße nach Maßgabe des Unterschiedes (Ergebnisses) ermittelt und diese dem Fahrer des Fahrzeugs auf haptischem Wege übermittelt. Dieses erfolgt vorzugsweise über das Lenkrad des Fahrzeugs und spricht somit die im allgemeinen sehr empfindsamen Hände des Fahrers an. Dabei gibt die Informationsgröße einen Richtungsvorschlag zur Lenkung des Fahrzeugs, damit der Fahrer einen Hinweis zur Lenkung des Fahrzeugs zum Sollweg hin erhält. Außerdem kann die Informationsgröße einen Vorschlag für die Stärke, d.h. die Geschwindigkeit des Lenkens geben. So muß der Fahrer z. B. um so stärker (schneller) gegenlenken, je mehr das Fahrzeug vom Sollweg abkommt. Es ist auch zu beachten, daß der ermittelte Sollweg nicht immer der ideale Weg oder der Weg ist, dem der Fahrer folgen möchte. Es bleibt daher dem Fahrer überlassen, die ihm übermittelte Information zu nutzen, um das Fahrzeug auf den Sollweg zu führen oder das Fahrzeug auf einen anderen von ihm gewünschten Weg zu lenken.

Im Falle der Beeinflussung der Bewegung eines Fahrzeugs wird nach Maßgabe des Unterschieds mindestens eine Radbremse angesteuert. Dieses ist vorzugsweise eine Radbremse an der Vorderachse des Fahrzeugs, da dort der Anteil an der gesamten Bremsung des Fahrzeugs bei ca. 70 bis 80 % liegt. Erfindungsgemäß wird der Bremsdruck an der Radbremse angehoben, um das Fahrzeug in eine andere Richtung, z. B. zum Sollweg hin zu lenken. Dies wird verhindert oder abgebrochen, wenn eine Fahrstabilitätsregelung aktiviert wird. Wird das Fahrzeug bereits abgebremst, so kann auch an einer Radbremse der Bremsdruck angehoben und an der anderen Radbremse derselben Achse der Bremsdruck abgesenkt werden. Vorzugsweise erfolgt das Absenken und gleichzeitige Anheben des Bremsdruckes derart, daß das Fahrzeug nicht weniger als zuvor abgebremst wird.

Die Bremsdruckerhöhung kann dabei weniger als 30 bar betragen und die Geschwindigkeit der Bremsdruckerhöhung (Bremsdruckgradient) kann im Bereich von 10 bis 20 bar/s liegen. Dieses bewirkt, daß der Fahrer nur ein leichtes Auslenken des Fahrzeugs verspürt, das Fahrzeug aber nicht stark von seinem derzeitigen Weg abweicht. Dadurch wird dem Fahrer lediglich mitgeteilt, daß er den ermittelten Sollweg verläßt. Der Fahrer kann jedoch weiterhin das Fahrzeug vollständig kontrollieren und weiterhin seinem Wunsch entsprechend das Fahrzeug lenken.

Ist der Fahrer abgelenkt und verläßt deshalb den Sollweg, so kann es zweckmäßig sein, ihn zu alarmieren. Dieses kann durch ein ruckartiges Bremsen geschehen, was durch einen Bremsdruckgradienten erreicht werden kann, der größer als 100 bar/s ist. Dadurch wird das Fahrzeug kurzzeitig kräftiger abgebremst, was für den Fahrer unangenehm ist, so daß er "aufwacht" und seine Aufmerksamkeit wieder dem Fahrvorgang widmet.

Verschiedene Ausführungsformen der Erfindung werden nun anhand der in den Zeichnungen dargestellten Ausführungsbeispiele näher erläutert. Dabei zeigen:
- Fig. 1: ein Blockschaltbild einer erfindungsgemäßen Ausführungsform der Vorrichtung zum Überwachen der Bewegung eines Fahrzeugs,
- Fig. 2: ein Blockschaltbild einer erfindungsgemäßen Ausführungsform der Vorrichtung zum Beeinflussen der Bewegung eines Fahrzeugs,
- Fig. 3: eine am Lenkrad angebrachte erfindungsgemäße Ausführungsform einer Übermittlungseinrichtung,
- Fig. 4a und 4 b: jeweils ein Flußdiagramm einer erfindungsgemäßen Ausführungsform des Verfahrens zum Überwachen bzw. Beeinflussen der Bewegung eines Fahrzeugs,
- Fig. 5: ein beispielhaftes Flußdiagramm zur Ermittlung der Informationsgröße, und
- Fig. 6: ein beispielhaftes Flußdiagramm zur Ansteuerung einer Radbremse.

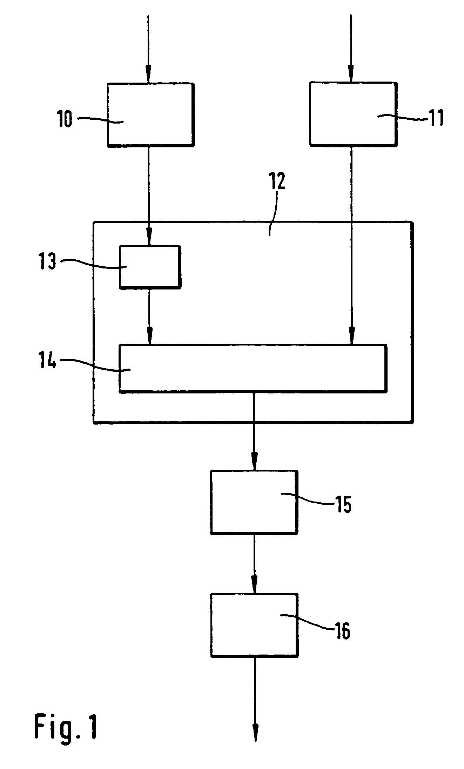

In Figur 1 ist ein Blockschaltbild einer erfindungsgemäßen Ausführungsform der Vorrichtung zum Überwachen der Bewegung eines Fahrzeugs auf einem Weg gezeigt. In einer Sollwegermittlungseinrichtung 10 wird ein Sollweg ermittelt, dem das Fahrzeug folgen soll. Die Sollwegermittlungseinrichtung 10 kann wie oben beschrieben einen optischen Sensor und eine damit verbundene Auswerteeinrichtung zur Auswertung einer oder mehrerer Sensorsignale aufweisen.

In einer Istbewegungsermittlungseinrichtung 11 wird die Istbewegung des Fahrzeugs ermittelt. Dieses kann über einen oder mehrere Radsensoren und/oder einen Lenkwinkelsensor und/oder einen Beschleunigungssensor und/oder einen Gierratensensor geschehen. Es können aber auch andere Komponenten anderer Richtungen berücksichtigt werden.

Die Ausgänge der Sollwegermittlungseinrichtung 10 und der Istbewegungsermittlungseinrichtung 11 sind mit den Eingängen einer Vergleichseinrichtung 12 verbunden. Diese führt eine vergleichende Betrachtung des in der Sollwegermittlungseinrichtung 10 ermittelten Sollweges und der in der Istbewegungsermittlungseinrichtung 11 ermittelten Istbewegung durch. Damit ein direkter Vergleich möglich ist, wird in dieser Ausführungsform zunächst in einer Sollbewegungsermittlungseinrichtung 13, die mit der Sollwegermittlungseinrichtung 10 verbunden ist, aus dem Sollweg die Sollbewegung ermittelt. Danach wird der Bewegungsunterschied zwischen der Sollbewegung und der Istbewegung in einer Bewegungsunterschiedermittlungseinrichtung 14 ermittelt. Dieser Bewegungsunterschied dient als Eingangsgröße für eine Informationsermittlungseinrichtung 15, die daraus eine Informationsgröße ermittelt, die wiederum über eine Übermittlungseinrichtung 16 an den Fahrer übermittelt wird. Die Informationsgröße kann sich dabei wie oben beschrieben auf eine Richtung zur Lenkung des Fahrzeugs zum Sollweg hin und auf die Stärke der Lenkung beziehen.

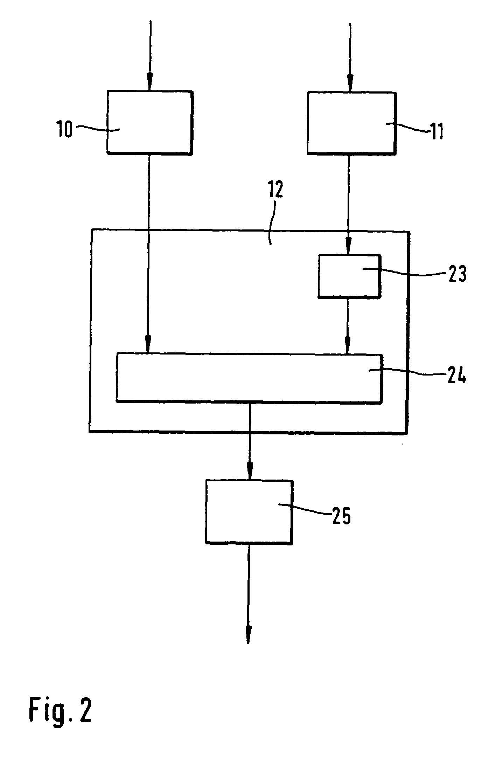

In Figur 2 ist ein Blockschaltbild einer erfindungsgemäßen Ausführungsform der Vorrichtung zum Beeinflussen der Bewegung eines Fahrzeugs auf einem Weg dargestellt. Die Sollwegermittlungseinrichtung 10, die Istbewegungsermittlungseinrichtung 11 und die Vergleichseinrichtung 12 sind dieselben wie in Figur 1 und werden daher nicht noch einmal beschrieben. Die Vergleichseinrichtung 12 weist in dieser Ausführungsform eine Extrapolationseinrichtung 23 auf, deren Eingang mit dem Ausgang der Istbewegungsermittlungseinrichtung 11 verbunden ist. Die Extrapolationseinrichtung 23 extrapoliert aus der in der Istbewegungsermittlungseinrichtung 11 ermittelten Istbewegung einen extrapolierten Istweg, auf dem sich das Fahrzeug aufgrund der Istbewegung bewegen würde, wenn die ermittelte Istbewegung beibehalten wird. Danach erfolgt in einer Wegunterschiedermittlungseinrichtung 24 die Bestimmung des Wegunterschiedes zwischen dem Istweg und dem Sollweg. Das Ergebnis der Wegunterschiedermittlung wird einer Radbremsenansteuereinrichtung 25 zugeführt, die daraufhin eine oder mehrere Radbremsen ansteuert.

Die jeweiligen Ein- und Ausgänge der Einrichtungen in den Figuren 1 und 2 können dabei aus mehreren "Einzelleitungen" bestehen, die zur Vereinfachung in den Figuren als eine einzelne "Leitung" eingezeichnet sind. Die Vergleichseinrichtung 12 kann für beide erfindungsgemäße Vorrichtungen wie in Figur 1 oder auch wie in Figur 2 beschrieben aufgebaut sein. Andere Ausführungsformen der Vergleichseinrichtung 12, die eine vergleichende Betrachtung ermöglichen, sind jedoch auch denkbar. Die Informationsermittlungseinrichtung 15 und die Radbremsenansteuereinrichtung 25 sind dann entsprechend zum Empfang und zur Verarbeitung der Vergleichsergebnissignale ausgelegt.

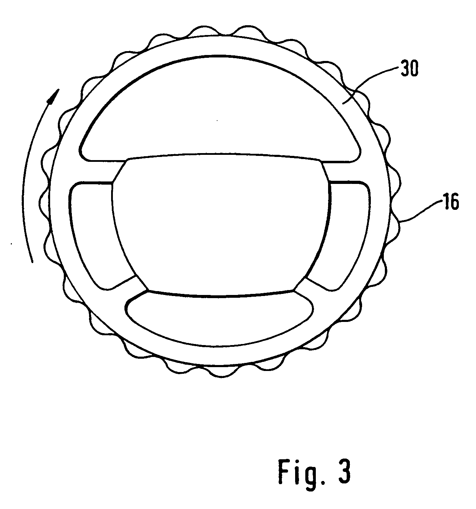

Vorzugsweise ist die Übermittlungseinrichtung 16 am Lenkrad 30 des. Fahrzeugs angeordnet. Ein Beispiel hierfür zeigt Figur 3. Hierbei ist die Übermittlungseinrichtung 16 um den äußeren Ring des Lenkrads 30 angeordnet. Die Übermittlungseinrichtung 16 kann eine piezoelektrische Folie aufweisen, die dann entsprechend um das Lenkrad gewickelt ist, oder auch ein elektrorheologisches Fluid, wie z. B. ein Gel, das seine Dichte in Abhängigkeit von einer angelegten Spannungsänderung ändert. Die Übermittlung der Informationsgröße kann z. B. über eine sich in einer Richtung fortpflanzende Welle erfolgen. Dieses ist in der Figur 3 durch die Wellenform der Übermittlungseinrichtung 16 angedeutet. Die Welle bewegt sich dort in Umfangsrichtung des Lenkrads, z. B. in Pfeilrichtung. Dadurch kann dem Fahrer z. B. mitgeteilt werden, daß er das Fahrzeug weiter nach rechts lenken sollte. Für eine Lenkung nach links würde sich die Welle dann entsprechend entgegen dem Uhrzeigersinn fortpflanzen. Durch die Amplitude und/oder der Frequenz der Wellenbewegung kann dem Fahrer mitgeteilt werden, wie schnell er die Lenkbewegung ausführen soll; z. B. kann eine größere Amplitude und/oder Frequenz eine größere Lenkgeschwindigkeit bedeuten. Der Fahrer umgreift das Lenkrad und damit auch die Übermittlungseinrichtung 16 und kann damit die Wellenbewegung fühlen.

Bei einer piezoelektrischen Folie oder einem elektrorheologischen Fluid (elektrisches Medium) wird die Informationsgröße, die somit mehrere Informationen beinhalten kann (z. B. Amplitude, Frequenz, Richtung) als elektrische Größe an die Übermittlungseinrichtung 16 weitergegeben. Dabei werden z. B. über die gesamte Übermittlungseinrichtung verteilt Spannungen angelegt, die sich in Abhängigkeit von der Informationsgröße zeitlich ändern, wodurch eine zeitliche Änderung der Dichte des elektrischen Mediums erzielt wird. Dadurch dehnt es sich aus oder zieht sich zusammen und führt somit eine Wellenbewegung aus.

Die Übermittlungseinrichtung 16 kann auch einen Schlauch aufweisen, der z. B. mit Luft gefüllt ist und bei dem die Luft unterschiedlichen Drücken ausgesetzt wird, wodurch ebenfalls eine Wellenbewegung erzeugt werden kann. Andere Medien, über die auf mechanischem Wege dem Fahrer eine Lenkrichtung und Lenkstärke angezeigt werden, sind ebenfalls möglich.

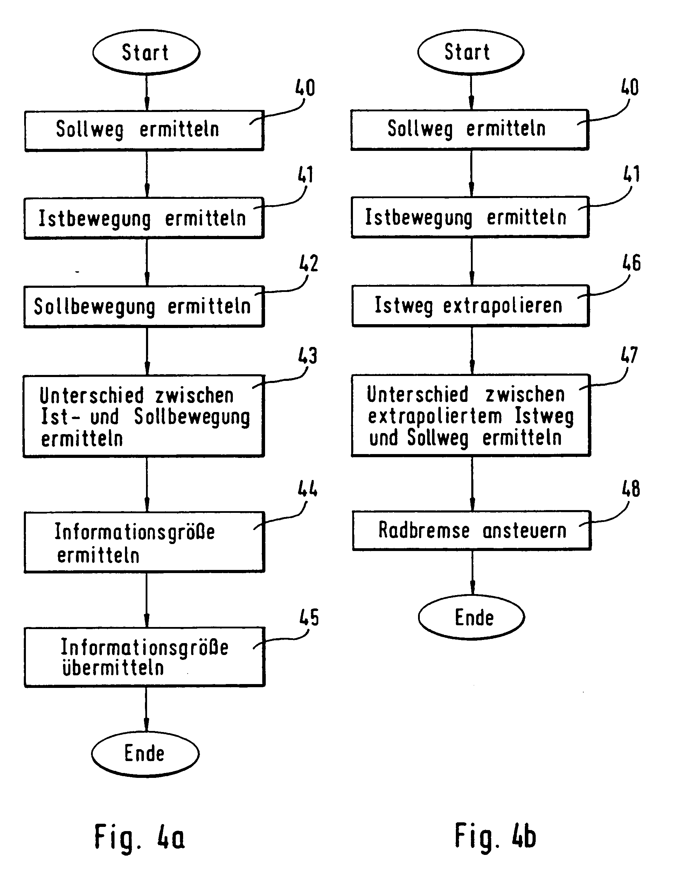

In Figur 4a ist ein Flußdiagramm einer erfindungsgemäßen Ausführungsform des Verfahrens zur Überwachung der Bewegung eines Fahrzeugs auf einem Weg dargestellt. Nach dem Start wird zunächst im Schritt 40 der Sollweg ermittelt. Danach wird im Schritt 41 die Istbewegung ermittelt. Im Schritt 42 wird aus dem Sollweg die Sollbewegung ermittelt. Danach erfolgt im Schritt 43 die Ermittlung des Bewegungsunterschiedes zwischen der Ist- und der Sollbewegung. Im Schritt 44 wird entsprechend dem in Schritt 43 ermittelten Unterschied die Informationsgröße ermittelt, die dann im Schritt 45 an den Fahrer haptisch übermittelt wird.

In Figur 4b ist ein Flußdiagramm einer erfindungsgemäßen Ausführungsform des Verfahrens zur Beeinflussung der Bewegung eines Fahrzeugs auf einem Weg dargestellt. Nach dem Start werden dort ebenfalls zunächst die Schritte 40 und 41 durchgeführt. Danach wird aus der Istbewegung der Istweg extrapoliert. Dieser wird im Schritt 47 mit dem Sollweg verglichen und der sich daraus ergebende Unterschied im Schritt 48 zur Ansteuerung einer Radbremse verwendet.

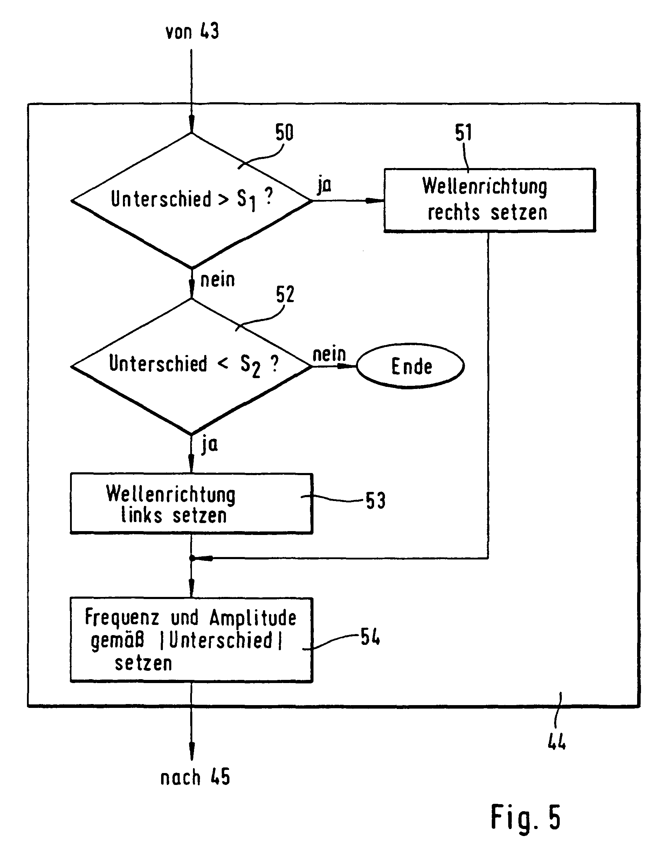

In Figur 5 ist der Schritt 44 zur Ermittlung der Informationsgröße der Figur 4a detaillierter aufgeführt. Vom Schritt 43 kommend wird zunächst im Schritt 50 abgefragt, ob der Unterschied zwischen der Ist- und der Sollbewegung größer als ein erster Schwellwert S₁ ist. Wird diese Frage bejaht, wird im Schritt 51 die Wellenrichtung nach rechts gesetzt. Danach wird zum Schritt 54 übergegangen. Wird die Abfrage im Schritt 50 verneint, wird im Schritt 52 abgefragt, ob der Unterschied kleiner als ein zweiter Schwellwert S₂ ist. Wird die Abfrage verneint, ist das Verfahren beendet. Wird die Abfrage im Schritt 52 bejaht, wird im Schritt 53 die Wellenrichtung nach links gesetzt. Danach wird im Schritt 54 die Frequenz und Amplitude gemäß dem Betrag des Unterschiedes bestimmt. Danach wird das Verfahren im Schritt 45 der Figur 4a fortgesetzt.

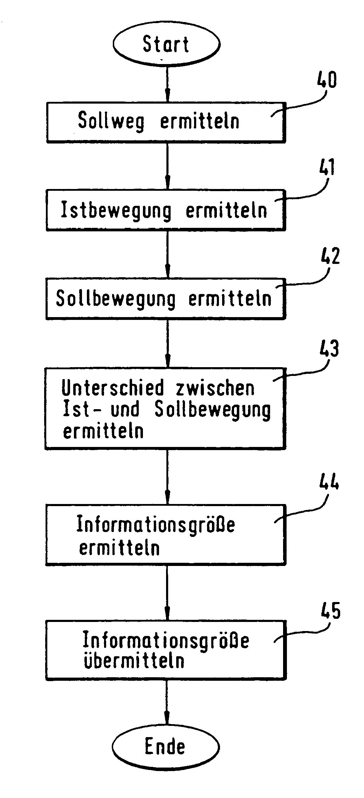

In Figur 6 ist der Schritt 48 zur Ansteuerung der Radbremse aus Figur 4b detaillierter erläutert. Vom Schritt 47 kommend wird zunächst im Schritt 60 abgefragt, ob der Unterschied größer als ein dritter Schwellwert S₃ ist. Wird diese Frage bejaht, wird im Schritt 61 der Bremsdruck für das rechte Vorderrad erhöht. Danach wird im Schritt 64 fortgefahren. Wird die Abfrage im Schritt 60 verneint, wird im Schritt 62 abgefragt, ob der Wegunterschied kleiner als ein vierter Schwellwert S₄ ist. Wird diese Abfrage verneint, ist das Verfahren beendet. Wird die Abfrage jedoch bejaht, wird im Schritt 63 der Bremsdruck für das linke Vorderrad erhöht. Anschließend wird im Schritt 64 die Bremsdruckhöhe entsprechend dem Betrag des Unterschiedes des Vergleiches gesetzt. Danach ist das Verfahren beendet.

In den Figuren 5 und 6 wird jeweils ein Unterschied abgefragt. Dieser Unterschied kann sowohl der Bewegungsunterschied als auch der Wegunterschied sein. Dementsprechend sind dann auch die Schwellwerte S₁ bis S₄ zu wählen. Die Schwellwerte sollten vorzugsweise auch in Abhängigkeit von der erlaubten Abweichung zwischen z. B. Istbewegung und Sollbewegung gewählt werden. So kann z. B. eine geringe Abweichung noch erlaubt sein, die dann z. B. keinen Bremseneingriff erfordert.

Die Schritte 51 und 53 der Figur 5 sind so zu verstehen, daß nicht direkt eine Welle in Bewegung gesetzt wird, sondern zunächst nur die Richtung festgelegt wird und diese dementsprechend im Schritt 54 zusammen mit der Frequenz und der Amplitude als Informationsgröße an den Schritt 45 weitergegeben werden. Erst dort erfolgt die Umsetzung dieser Information.

Die Schritte 61 und 63 der Figur 6 sind ebenfalls so zu sehen, daß zunächst nur festgelegt wird, an welchem Vorderrad der Bremsdruck erhöht wird. Erst im Schritt 64 wird dann der Bremsdruck an dem entsprechenden Rad mit der ermittelten Bremsdruckhöhe zum Bremsen verwendet.

Die Informationsgröße kann über eine oder mehrere Fuzzy-Funktionen ermittelt werden, und die Radbremse kann in Abhängigkeit von einer oder mehreren Fuzzy-Funktionen angesteuert werden. Hierbei soll der Begriff "Fuzzy-Funktion" sowohl eine Fuzzifizierung als auch eine Defuzzifizierung meinen. Eine Fuzzy-Steuerung erscheint sinnvoll, da z. B. die Ermittlung der Sollbewegung aus dem Sollweg zu vielen Ergebnissen führen kann, da viele Möglichkeiten bestehen, das Fahrzeug auf dem Sollweg zu bewegen. So kann z. B. der Sollweg mit unterschiedlicher Geschwindigkeit abgefahren werden. Diese Entscheidung trifft normalerweise der Fahrer, der z. B. die Geschwindigkeit nur ungenau bestimmen kann. In der Sollbewegungsermittlungseinrichtung 13 kann daher z. B. versucht werden, die möglichen Aktivitäten eines Fahrers abzubilden, die das Fahrzeug auf den Sollweg führen. Dafür können unscharfe Mengen bzw. Funktionen (Fuzzy-Funktionen) vorteilhaft gewählt werden. Genausogut kann die Informationsermittlungseinrichtung 15 aus dem in der Bewegungsunterschiedermittlungseinrichtung 14 ermittelten Unterschied über Fuzzy-Funktionen eine Informationsgröße zur Übermittlung an den Fahrer ermitteln. Bei der Informationsgröße ist z. B. die exakte Größe (Amplitude) nicht von Bedeutung, es braucht z. B. nur eine Lenktendenz angezeigt werden, da der Fahrer auch nur tendenziell und nicht absolut fühlen kann.

Ebenfalls braucht die Extrapolationseinrichtung 23 den Istweg nur ungefähr aus der Istbewegung ermitteln, weshalb auch hier Fuzzy-Funktionen geeignet sind. Ebenso kann die Ansteuerung der Radbremsen in der Radbremsenansteuereinrichtung 25 tendenziell geschehen, so daß sich auch hier eine Ermittlung der Bremsdrücke über Fuzzy-Funktionen anbietet.

Die Ermittlung über Fuzzy-Funktionen stellt jedoch nur eine Möglichkeit unter anderen dar.

Für die Ansteuerung einer oder mehrerer Radbremsen ist wichtig, daß eine Tendenz weitergegeben wird, die der Fahrer spürt, aber die es ihm erlaubt, das Fahrzeug weiter entsprechend seinen Wünschen zu steuern. Dieses schließt ein "Aufwecken" des Fahrers ein, indem ein Bremsdruck kurzzeitig erhöht wird, so daß der Fahrer einen Ruck verspürt. Auch dieses darf nur so geschehen, daß der Fahrer nicht erschreckt wird und dadurch, wenn auch nur für kurze Zeit, die Kontrolle über sein Fahrzeug verliert.

## Patentansprüche

1. Verfahren zum Überwachen der Bewegung eines Fahrzeugs auf einem Weg mit folgenden Schritten :
- Ermitteln eines Sollweges (40),
- Ermitteln der Istbewegung des Fahrzeugs (41),
- Vergleichende Betrachtung des Sollweges und der Istbewegung,
wobei die vergleichende Betrachtung die Schritte Ermitteln einer Sollbewegung für das Fahrzeug nach Maßgabe des Sollweges und Ermitteln eines Bewegungsunterschiedes zwischen der Sollbewegung und der Istbewegung aufweist (43) und wobei der Bewegungsunterschied das Ergebnis darstellt, oder wobei die vergleichende Betrachtung die Schritte Extrapolieren eines Istweges (46) nach Maßgabe der Istbewegung und Ermitteln eines Wegunterschiedes (47) zwischen dem Sollweg und dem extrapolierten Istweg aufweist und wobei der Wegunterschied das Ergebnis darstellt, und
- Übermitteln einer Informationsgröße (45) nach Maßgabe des Ergebnisses der vergleichenden Betrachtung an den Fahrer des Fahrzeugs, wobei das Übermitteln haptisch durchgeführt wird,
**dadurch gekennzeichnet, daß** die Informationsgröße einen Richtungsvorschlag zur Lenkung des Fahrzeugs aufweist.

2. Verfahren zum Beeinflussen der Bewegung eines Fahrzeugs auf einem Weg mit folgenden Schritten:
- Ermitteln eines Sollweges (40),
- Ermitteln der Istbewegung des Fahrzeugs (41),
- Vergleichende Betrachtung des Sollweges und der Istbewegung,
wobei die vergleichende Betrachtung die Schritte Ermitteln einer Sollbewegung für das Fahrzeug nach Maßgabe des Sollweges und Ermitteln eines Bewegungsunterschiedes zwischen der Sollbewegung und der Istbewegung (43) aufweist und wobei der Bewegungsunterschied das Ergebnis darstellt, oder wobei die vergleichende Betrachtung die Schritte Extrapolieren eines Istweges (46) nach Maßgabe der Istbewegung und Ermitteln eines Wegunterschiedes (47) zwischen dem Sollweg und dem extrapolierten Istweg aufweist und wobei der Wegunterschied das Ergebnis darstellt, und
- Ansteuern mindestens einer Radbremse (48) nach Maßgabe des Ergebnisses der vergleichenden Betrachtung,
wobei an einer Radbremse, vorzugsweise an der Vorderachse des Fahrzeugs, der Bremsdruck angehoben wird,
**dadurch gekennzeichnet, daß** das Verfahren verhindert oder abgebrochen wird, wenn eine Fahrstabilitätsregelung aktiviert wird.

3. Verfahren nach einem der vorherigen Ansprüche, **dadurch gekennzeichnet, daß** die Informationsgröße nach Anspruch 1 nach Maßgabe einer Fuzzy-Funktion ermittelt wird und die Radbremse nach Anspruch 2 nach Maßgabe einer Fuzzy-Funktion angesteuert wird.

4. Verfahren nach Anspruch 1, **dadurch gekennzeichnet, daß** die Informationsgröße einen Vorschlag für die Lenkgeschwindigkeit des Fahrzeugs aufweist.

5. Verfahren nach einem der Ansprüche 1, 3, 4, **dadurch gekennzeichnet, daß** das Übermitteln über das Lenkrad (30) des Fahrzeugs erfolgt.

6. Verfahren nach einem der Ansprüche 1, 3, 4, 5, **dadurch gekennzeichnet, daß** das Übermitteln durch eine sich in einer Richtung bewegende Welle durchgeführt wird.

7. Verfahren nach Anspruch 1 und 6, **dadurch gekennzeichnet, daß** die Richtung der sich bewegenden Welle die Richtung zur Lenkung angibt.

8. Verfahren nach Anspruch 4 und 7, **dadurch gekennzeichnet, daß** die Amplitude und/oder die Frequenz der Welle die Lenkgeschwindigkeit angibt.

9. Verfahren nach Anspruch 2, **dadurch gekennzeichnet, daß** an der anderen Radbremse der Achse der Bremsdruck abgesenkt wird.

10. Verfahren nach Anspruch 2 oder 9, **dadurch gekennzeichnet, daß** die Bremsdruckerhöhung weniger als 30 bar und/oder der Gradient der Bremsdruckerhöhung im Bereich von 10 - 20 bar/s liegt.

11. Verfahren nach Anspruch 2, **dadurch gekennzeichnet, daß** die Radbremse zeitweise mit einem Bremsdruckgradienten von größer als 100 bar/s angesteuert wird.

12. Vorrichtung zum Überwachen der Bewegung eines Fahrzeugs auf einem Weg, insbesondere zur Durchführung des Verfahrens nach einem der Ansprüche 1, 3 bis 8 mit:
- einer Sollwegermittlungseinrichtung (10),
- einer Istbewegungsermittlungseinrichtung (11),
- einer Vergleichseinrichtung (12), deren Eingänge mit den Ausgängen der Sollwegermittlungseinrichtung (10) und der Istbewegungsermittlungseinrichtung (11) verbunden sind,
- einer Informationsermittlungseinrichtung (15), deren Eingang mit dem Ausgang der Vergleichseinrichtung (12) verbunden ist, und
- einer haptischen Übermittlungseinrichtung (16), deren Eingang mit dem Ausgang der Informationsermittlungseinrichtung (15) verbunden ist, **dadurch gekennzeichnet, daß** die Übermittlungseinrichtung derart ausgebildet ist, daß ein Richtungsvorschlag zur Lenkung des Fahrzeugs an den Fahrer übermittelt wird.

13. Vorrichtung zum Beeinflussen der Bewegung eines Fahrzeugs auf einem Weg, insbesondere zur Durchführung des Verfahrens nach einem der Ansprüche 2, 3, 9 bis 11 mit:
- einer Sollwegermittlungseinrichtung (10),
- einer Istbewegungsermittlungseinrichtung (11),
- einer Vergleichseinrichtung (12), deren Eingänge mit den Ausgängen der Sollwegermittlungseinrichtung (10) und der Istbewegungsermittlungseinrichtung (11) verbunden sind, und
- einer Radbremsenansteuereinrichtung (25), deren Eingang mit dem Ausgang der Vergleichseinrichtung (12) verbunden ist, und die derart ausgebildet ist, daß der Bremsdruck an einer Radbremse angehoben wird, **dadurch gekennzeichnet, daß** die Anhebung des Bremsdrucks verhindert oder abgebrochen wird, wenn eine Fahrstabilitätsregelung aktiviert wird.

14. Vorrichtung nach Anspruch 12 oder 13, **dadurch gekennzeichnet, daß** die Vergleichseinrichtung (12) eine Sollbewegungsermittlungseinrichtung (13), deren Eingang mit dem Ausgang der Sollwegermittlungseinrichtung (10) verbunden ist, und eine Bewegungsunterschiedermittlungseinrichtung (14), deren Eingänge mit den Ausgängen der Sollbewegungsermittlungseinrichtung (13) und der Istbewegungsermittlungseinrichtung (11) verbunden sind, aufweist.

15. Vorrichtung nach einem der Ansprüche 12 bis 14, **dadurch gekennzeichnet, daß** die Vergleichseinrichtung (12) eine Extrapolationseinrichtung (23), deren Eingang mit dem Ausgang der Istbewegungsermitttlungeinrichtung (11) verbunden ist, und eine Wegunterschiedermittlungseinrichtung (24), deren Eingänge mit den Ausgängen der Extrapolationseinrichtung (23) und der Sollwegermittlungseinrichtung (10) verbunden sind, aufweist.

16. Vorrichtung nach einem der Ansprüche 12, 14, 15, **dadurch gekennzeichnet, daß** die Übermittlungseinrichtung (16) am Lenkrad (30) des Fahrzeugs angeordnet ist.

17. Vorrichtung nach einem der Ansprüche 12, 14 bis 16, **dadurch gekennzeichnet, daß** die Übermittlungseinrichtung (16) eine piezoelektrische Folie aufweist.

18. Vorrichtung nach einem der Ansprüche 12, 14 bis 16, **dadurch gekennzeichnet, daß** die Übermittlungseinrichtung (16) ein elektrorheologisches Fluid aufweist.

19. Vorrichtung nach einem der Ansprüche 12 bis 18, **dadurch gekennzeichnet, daß** die Vergleichseinrichtung (12) und/oder die Informationsermittlungseinrichtung (15) nach Anspruch 12 und/oder die Radbremsenansteuereinrichtung (25) nach Anspruch 13 eine Fuzzy-Steuereinrichtung aufweist.

20. Vorrichtung nach einem der Ansprüche 12 bis 19, **dadurch gekennzeichnet, daß** die Sollwegermittlungseinrichtung (10) einen optischen Sensor und eine mit diesem verbundene Auswerteeinrichtung aufweist.

21. Vorrichtung nach einem der Ansprüche 12 bis 20, **dadurch gekennzeichnet, daß** die Istbewegungsermittlungseinrichtung (11) einen Radsensor und/oder einen Lenkwinkelsensor und/oder einen Beschleunigungssensor und/oder einen Gierratensensor aufweist.

## Claims

1. Method of monitoring the movement of a vehicle on a path comprising the following steps:
- determining a nominal path (40),
- determining the actual movement of the vehicle (41),
- comparative analysis of the nominal path and the actual movement,
with the comparative analysis comprising the steps of determining a nominal movement for the vehicle according to the nominal path and determining a difference in movement between the nominal movement and the actual movement (43), and the difference in movement representing the result,
- or with the comparative analysis comprising the steps of extrapolating an actual path (46) according to the actual movement and determining a difference in path (47) between the nominal path and the extrapolated actual path, and the difference in path representing the result, and
- transmitting an information variable (45) according to the result of the comparative analysis to the driver of the vehicle, the transmission being performed haptically,
**characterized in that** the information variable includes a proposal of direction for steering the vehicle.

2. Method of influencing the movement of a vehicle on a path comprising the following steps:
- determining a nominal path (40),
- determining the actual movement of the vehicle (41),
- comparative analysis of the nominal path and the actual movement,
with the comparative analysis comprising the steps of determining a nominal movement for the vehicle according to the nominal path and determining a difference in movement between the nominal movement and the actual movement (43), and the difference in movement representing the result,
or with the comparative analysis comprising the steps of extrapolating an actual path (46) according to the actual movement and determining a difference in path (47) between the nominal path and the extrapolated actual path, and the difference in path representing the result, and
actuating at least one wheel brake (48) according to the result of the comparative analysis, and the brake pressure is raised on one wheel brake, preferably on the front axle of the vehicle,
**characterized in that** the method is prevented or discontinued when driving stability control is activated.

3. Method as claimed in any one of the preceding claims,
**characterized in that** the information variable as claimed in claim 1 is determined according to a fuzzy function, and the wheel brake as claimed in claim 2 is actuated according to a fuzzy function.

4. Method as claimed in claim 1,
**characterized in that** the information variable includes a proposal for the steering velocity of the vehicle.

5. Method as claimed in any one of claims 1, 3, 4,
**characterized in that** the transmission is performed by way of the steering wheel (30) of the vehicle.

6. Method as claimed in any one of claims 1, 3, 4, 5,
**characterized in that** the transmission is performed by a wave which moves in one direction.

7. Method as claimed in claims 1 and 6,
**characterized in that** the direction of the moving wave indicates the direction for steering.

8. Method as claimed in claims 4 and 7,
**characterized in that** the amplitude and/or the frequency of the wave indicates the steering velocity.

9. Method as claimed in claim 2,
**characterized in that** the brake pressure is decreased on the other wheel brake of the axle.

10. Method as claimed in claim 2 or 9,
**characterized in that** the brake pressure increase amounts to less than 30 bar, and/or the gradient of the brake pressure increase is in the range of 10 to 20 bar/s.

11. Method as claimed in claim 2,
**characterized in that** the wheel brake is actuated temporarily with a brake pressure gradient of more than 100 bar/s.

12. Device of monitoring the movement of a vehicle on a path, especially for implementing the method as claimed in any one of claims 1, 3 to 8, comprising:
- a nominal path determining device (10),
- an actual movement determining device (11),
- a comparison device (12) whose inputs are connected to the outputs of the nominal path determining device (10) and the actual movement determining device (11),
- an information determining device (15) whose input is connected to the output of the comparison device (12), and
- a haptic transmitting device (16) whose input is connected to the output of the information determining device (15),
**characterized in that** the transmitting device is designed in such a manner that a proposal of direction for steering the vehicle is transmitted to the driver.

13. Device of influencing the movement of a vehicle on a path, especially for implementing the method as claimed in any one of claims 2, 3, 9 to 11, comprising:
- a nominal path determining device (10),
- an actual movement determining device (11),
- a comparison device (12) whose inputs are connected to the outputs of the nominal path determining device (10) and the actual movement determining device (11), and
- a wheel brake actuation device (25) whose input is connected to the output of the comparison device (12) and which is designed in such a manner that the brake pressure is raised at one wheel brake,
**characterized in that** the increase of the brake pressure is prevented or discontinued when driving stability control is activated.

14. Device as claimed in claim 12 or 13,
**characterized in that** the comparison device (12) includes a nominal movement determining device (13) whose input is connected to the output of the nominal path determining device (10), and a movement difference determining device (14) whose inputs are connected to the outputs of the nominal movement determining device (13) and the actual movement determining device (11).

15. Device as claimed in any one of claims 12 to 14,
**characterized in that** the comparison device (12) includes an extrapolation device (23) whose input is connected to the output of the actual movement determining device (11), and a path difference determining device (24) whose inputs are connected to the outputs of the extrapolation device (23) and the nominal path determining device (10).

16. Device as claimed in any one of claims 12, 14, 15,
**characterized in that** the transmitting device (16) is arranged at the steering wheel (30) of the vehicle.

17. Device as claimed in any one of claims 12, 14 to 16,
**characterized in that** the transmitting device (16) includes a piezoelectric foil.

18. Device as claimed in any one of claims 12, 14 to 16,
**characterized in that** the transmitting device (16) includes an electrorheologic fluid.

19. Device as claimed in any one of claims 12 to 18,
**characterized in that** the comparison device (12) and/or the information determining device (15) as claimed in claim 12 and/or the wheel brake actuation device (25) as claimed in claim 13 includes a fuzzy control logic.

20. Device as claimed in any one of claims 12 to 19,
**characterized in that** the nominal path determining device (10) includes an optical sensor and an evaluating device connected to said sensor.

21. Device as claimed in any one of claims 12 to 20,
**characterized in that** the actual movement determining device (11) includes a wheel sensor, and/or a steering angle sensor, and/or an acceleration sensor, and/or a yaw rate sensor.

## Revendications

1. Procédé pour contrôler le déplacement d'un véhicule sur une trajectoire, comportant les étapes suivantes :
- déterminer une trajectoire de consigne (40),
- déterminer le déplacement réel du véhicule (41),
- examen comparatif de la trajectoire de consigne et du déplacement réel,
- l'examen comparatif comportant les étapes de détermination d'un déplacement de consigne pour le véhicule en fonction de la trajectoire de consigne et détermination d'une différence de déplacement entre le déplacement de consigne et le déplacement réel (43) et la différence de déplacement représentant le résultat, ou l'examen comparatif comportant les étapes d'extrapolation d'une trajectoire réelle (46) en fonction du déplacement réel et détermination d'une différence de trajectoire (47) entre la trajectoire de consigne et la trajectoire réelle extrapolée, et la différence de trajectoire représentant le résultat, et
- transmission d'une grandeur d'information (45) en fonction du résultat de l'examen comparatif, au conducteur du véhicule, la transmission étant exécutée de manière tactile,
**caractérisé en ce que** la grandeur d'information comporte une proposition de direction pour le braquage du véhicule.

2. Procédé pour influencer le déplacement d'un véhicule sur une trajectoire, comportant les étapes suivantes :
- détermination d'une trajectoire de consigne (40),
- détermination du déplacement réel du véhicule (41),
- examen comparatif de la trajectoire de consigne et du déplacement réel,
- l'examen comparatif comportant les étapes de détermination d'un déplacement de consigne pour le véhicule en fonction de la trajectoire de consigne et détermination d'une différence de déplacement entre le déplacement de consigne et le déplacement réel (43) et la différence de déplacement représentant le résultat, ou l'examen comparatif comportant les étapes d'extrapolation d'une trajectoire réelle (46) en fonction du déplacement réel et détermination d'une différence de trajectoire (47) entre la trajectoire de consigne et la trajectoire réelle extrapolée, et la différence de trajectoire représentant le résultat, et
- commander au moins un frein de roue (48) en fonction du résultat de l'examen comparatif, sur un frein de roue, de préférence sur l'essieu avant du véhicule, la pression de freinage étant supprimée,
**caractérisé en ce que** le procédé est empêché ou interrompu si une régulation de la stabilité est activée.

3. Procédé selon l'une des revendications précédentes, **caractérisé en ce que** la grandeur d'information selon la revendication 1 est déterminée suivant une fonction fuzzy et le frein de roue selon la revendication 2 est commandé selon une fonction fuzzy.

4. Procédé selon la revendication 1, **caractérisé en ce que** la grandeur d'information comporte une proposition pour la vitesse de braquage du véhicule.

5. Procédé selon l'une des revendications 1, 3, 4, **caractérisé en ce que** la transmission s'effectue par le volant (30) du véhicule.

6. Procédé selon l'une des revendications 1, 3, 4, 5, **caractérisé en ce que** la transmission est exécutée par une onde se déplaçant dans une direction.

7. Procédé selon les revendications 1 et 6, **caractérisé en ce que** la direction de l'onde se déplaçant indique le sens du braquage.

8. Procédé selon les revendications 4 et 7, **caractérisé en ce que** l'amplitude et/ou la fréquence de l'onde indique la vitesse de braquage.

9. Procédé selon la revendication 2, **caractérisé en ce que** sur l'autre frein de roue de l'essieu la pression de freinage est abaissée.

10. Procédé selon la revendication 2 ou 9, **caractérisé en ce que** l'augmentation de la pression de freinage est inférieure à 30 bars et/ou le gradient de l'augmentation de la pression de freinage se situe dans la plage de 10 à 20 bars/s.

11. Procédé selon la revendication 2, **caractérisé en ce que** le frein de roue est commandé temporairement avec un gradient de pression de freinage supérieur à 100 bars/s.

12. Dispositif pour contrôler le déplacement d'un véhicule sur une trajectoire, en particulier pour la mise en oeuvre du procédé selon l'une des revendications 1, 3 à 8, comportant :
- un dispositif de détermination de la trajectoire de consigne (10),
- un dispositif de détermination du déplacement réel (11),
- un dispositif de comparaison (12) dont les entrées sont reliées aux sorties du dispositif de détermination de la trajectoire de consigne (10) et du dispositif de détermination du déplacement réel (11),
- un dispositif de détermination d'information (15) dont l'entrée est reliée à la sortie du dispositif de comparaison (12), et
- un dispositif de transmission (16) tactile dont l'entrée est reliée à la sortie du dispositif de détermination de l'information (15),
**caractérisé en ce que** le dispositif de transmission est réalisé de manière qu'une proposition de direction pour le braquage du véhicule soit transmise au conducteur.

13. Dispositif pour influencer le déplacement d'un véhicule sur une trajectoire, en particulier pour la mise en oeuvre du procédé selon l'une des revendications 2, 3, 9 à 11, comportant :
- un dispositif de détermination de la trajectoire de consigne (10),
- un dispositif de détermination du déplacement réel (11),
- un dispositif de comparaison (12) dont les entrées sont reliées aux sorties du dispositif de détermination de la trajectoire de consigne (10) et du dispositif de détermination du déplacement réel (11), et
- un dispositif de commande de frein de roue (25) dont l'entrée est reliée à la sortie du dispositif de comparaison (12), et qui est conçu de manière que la pression de freinage soit supprimée sur un frein de roue,
**caractérisé en ce que** la suppression de la pression de freinage est empêchée ou interrompue si une régulation de la stabilité est activée.

14. Dispositif selon la revendication 12 ou 13, **caractérisé en ce que** le dispositif de comparaison (12) comporte un dispositif de détermination de déplacement de consigne (13) dont l'entrée est reliée à la sortie du dispositif de détermination de la trajectoire de consigne (10), et un dispositif de détermination de la différence de déplacement (14) dont les entrées sont reliées aux sorties du dispositif de détermination du déplacement de consigne (13) et du dispositif de détermination du déplacement réel (11).

15. Dispositif selon l'une des revendications 12 à 14, **caractérisé en ce que** le dispositif de comparaison (12) comporte un dispositif d'extrapolation (23) dont l'entrée est reliée à la sortie du dispositif de détermination de déplacement réel (11), et un dispositif de détermination de différence de trajectoire (24) dont les entrées sont reliées aux sorties du dispositif d'extrapolation (23) et du dispositif de détermination de la trajectoire de consigne (10).

16. Dispositif selon l'une des revendications 12, 14, 15, **caractérisé en ce que** le dispositif de détermination (16) est disposé sur le volant (30) du véhicule.

17. Dispositif selon l'une des revendications 12, 14 à 16, **caractérisé en ce que** le dispositif de détermination (16) présente une feuille piézo-électrique.

18. Dispositif selon l'une des revendications 12, 14 à 16, **caractérisé en ce que** le dispositif de détermination (16) comporte un fluide électrorhéologique.

19. Dispositif selon l'une des revendications 12 à 18, **caractérisé en ce que** le dispositif de comparaison (12) et/ou le dispositif de détermination de l'information (15) selon la revendication 12 et/ou le dispositif de commande de frein de roue (25) selon la revendication 13 comportent un dispositif de commande floue.

20. Dispositif selon l'une des revendications 12 à 19, **caractérisé en ce que** le dispositif de détermination de la course de consigne (10) comporte un capteur optique et un dispositif d'exploitation relié à celui-ci.

21. Dispositif selon l'une des revendications 12 à 20, **caractérisé en ce que** le dispositif de détermination de déplacement réel (11) comporte un capteur de roue et/ou un capteur d'angle de braquage et/ou un capteur d'accélération et/ou un capteur d'embardée.
